# EUROPEAN PATENT APPLICATION

(11) **EP 4 797 841 A1**
(43) Date of publication of application: **26.08.2026**
(21) Application number: 24878922.4
(22) Date of filing: 12.10.2024
(51) Int. Cl.: H04W 72/1263

(54) **RESOURCE CONFIGURATION METHOD AND APPARATUS, AND TERMINAL AND NETWORK-SIDE DEVICE**

(30) Priority: 19.10.2023 CN 202311358797
(71) Applicant: Vivo Mobile Communication Co., Ltd., Dongguan, Guangdong 523863 (CN)
(72) Inventor: LIN, Zhipeng, Dongguan, Guangdong 523863 (CN); CHEN, Xiaohang, Dongguan, Guangdong 523863 (CN); LU, Zhi, Dongguan, Guangdong 523863 (CN)
(74) Representative: Conti, Marco
(86) International application number: PCT/CN2024/124449
(87) International publication number: WO 2025/082278

(57) **Abstract**

This application relates to the field of communication technologies, and discloses a resource configuration method and apparatus, a terminal, and a network side device. The resource configuration method in embodiments of this application includes: A terminal receives first configuration information sent by a network side device. The terminal determines a subband in an enhanced duplex mode based on the first configuration information, where the first configuration information includes at least one of the following: a period of the enhanced duplex mode; a width of the subband; a starting frequency domain position of the subband; a size of a guard band between the subband and another bandwidth, where the another bandwidth is a bandwidth other than the subband among bandwidths configured in the enhanced duplex mode; an attribute of the subband, where the attribute is related to a transmission direction; and a slot mode of a subband configured within a period of the enhanced duplex mode.

## Description

### CROSS-REFERENCE TO RELATED APPLICATIONS

This application claims priority to Chinese Patent Application No. 202311358797.8, filed in China on October 19, 2023, which is incorporated herein by reference in its entirety.

### TECHNICAL FIELD

This application relates to the field of communication technologies, and specifically, to a resource configuration method and apparatus, a terminal, and a network side device.

### BACKGROUND

In mobile communication systems, enhancement technologies have been developed for full duplex (full duplex) to adapt to diverse scenarios and service requirements. In a new radio (New Radio, NR) system, configuring a full duplex operation can significantly improve delay and coverage performance of a time division duplex (Time Division Duplex, TDD) system. At present, the enhanced duplex mode mainly targets connected (connected) terminals, and adopts a scheme where the network side supports full duplex while the terminal side supports half duplex. The resource configuration for terminals in other states under the enhanced duplex mode remains unclear, which impairs the transmission performance of such terminals.

### SUMMARY

Embodiments of this application provide a resource configuration method and apparatus, a terminal, and a network side device, to resolve a problem of unclear resource configuration for the terminal in an enhanced duplex mode in the related art.

According to a first aspect, a resource configuration method is provided, performed by a terminal, and including:
A terminal receives first configuration information sent by a network side device.

The terminal determines a subband in an enhanced duplex mode based on the first configuration information, and the first configuration information includes at least one of the following:
a period of the enhanced duplex mode;
a width of the subband;
a starting frequency domain position of the subband;
a size of a guard band between the subband and another bandwidth, where the another bandwidth is a bandwidth other than the subband among bandwidths configured in the enhanced duplex mode;
an attribute of the subband, where the attribute is related to a transmission direction; and
a slot mode of the subband configured within the period of the enhanced duplex mode.

According to a second aspect, a resource configuration method is provided, performed by a network side device, and including:
A network side device sends first configuration information to a terminal. The first configuration information is used for determining a subband in an enhanced duplex mode, and the first configuration information includes at least one of the following:
a period of the enhanced duplex mode;
a width of the subband;
a starting frequency domain position of the subband;
a size of a guard band between the subband and another bandwidth, where the another bandwidth is a bandwidth other than the subband among bandwidths configured in the enhanced duplex mode;
an attribute of the subband, where the attribute is related to a transmission direction; and
a slot mode of the subband configured within the period of the enhanced duplex mode.

According to a third aspect, a resource configuration apparatus is provided, including:
a receiving module, configured to receive first configuration information sent by a network side device; and
a determining module, configured to determine a subband in an enhanced duplex mode based on the first configuration information, where the first configuration information includes at least one of the following:
   a period of the enhanced duplex mode;
   a width of the subband;
   a starting frequency domain position of the subband;
   a size of a guard band between the subband and another bandwidth, where the another bandwidth is a bandwidth other than the subband among bandwidths configured in the enhanced duplex mode;
   an attribute of the subband, where the attribute is related to a transmission direction; and
   a slot mode of the subband configured within the period of the enhanced duplex mode.

According to a fourth aspect, a resource configuration apparatus is provided, including:
a sending module, configured to send first configuration information to a terminal, where the first configuration information is used for determining a subband in an enhanced duplex mode, and the first configuration information includes at least one of the following:
a period of the enhanced duplex mode;
a width of the subband;
a starting frequency domain position of the subband;
a size of a guard band between the subband and another bandwidth, where the another bandwidth is a bandwidth other than the subband among bandwidths configured in the enhanced duplex mode;
an attribute of the subband, where the attribute is related to a transmission direction; and
a slot mode of the subband configured within the period of the enhanced duplex mode.

According to a fifth aspect, a terminal is provided. The terminal includes a processor and a memory. The memory stores a program or instructions executable on the processor. The program or the instructions, when executed by the processor, implement the steps of the method according to the first aspect.

According to a sixth aspect, a terminal is provided, including a processor and a communication interface, where the communication interface is configured to receive first configuration information sent by a network side device, the processor is configured to determine a subband in an enhanced duplex mode based on the first configuration information, and the first configuration information includes at least one of the following: a period of the enhanced duplex mode; a width of the subband; a starting frequency domain position of the subband; a size of a guard band between the subband and another bandwidth, where the another bandwidth is a bandwidth other than the subband among bandwidths configured in the enhanced duplex mode; an attribute of the subband, where the attribute is related to a transmission direction; and a slot mode of a subband configured within a period of the enhanced duplex mode.

According to a seventh aspect, a network side device is provided. The network side device includes a processor and a memory. The memory stores a program or instructions executable on the processor. The program or the instructions, when executed by the processor, implement the steps of the method according to the second aspect.

According to an eighth aspect, a network side device is provided, including a processor and a communication interface, where the communication interface is configured to send first configuration information to a terminal, the first configuration information is used for determining a subband in an enhanced duplex mode, and the first configuration information includes at least one of the following: a period of the enhanced duplex mode; a width of the subband; a starting frequency domain position of the subband; a size of a guard band between the subband and another bandwidth, where the another bandwidth is a bandwidth other than the subband among bandwidths configured in the enhanced duplex mode; an attribute of the subband, where the attribute is related to a transmission direction; and a slot mode of a subband configured within a period of the enhanced duplex mode.

According to a ninth aspect, a readable storage medium is provided. The readable storage medium stores a program or instructions. The program or the instructions, when executed by a processor, implement the steps of the method according to the first aspect, or implement the steps of the method according to the second aspect.

According to a tenth aspect, a wireless communication system is provided, including a terminal and a network side device. The terminal may be configured to perform the steps of the method according to the first aspect. The network side device may be configured to perform the steps of the method according to the second aspect.

According to an eleventh aspect, a chip is provided. The chip includes a processor and a communication interface. The communication interface is coupled to the processor. The processor is configured to run a program or instructions to implement the method according to the first aspect, or implement the method according to the second aspect.

According to a twelfth aspect, a computer program/program product is provided. The computer program/program product is stored in a storage medium. The computer program/program product is executed by at least one processor, to implement the steps of the method in the first aspect or the steps of the method in the second aspect.

In embodiments of this application, the network side device sends the first configuration information, so that the terminal can determine the subband in the enhanced duplex mode based on the first configuration information, thereby defining how to configure frequency-domain resources on the terminal side in the enhanced duplex mode, to enable the terminal to flexibly use the duplex mode, and effectively improve transmission flexibility and transmission performance of the terminal.

### BRIEF DESCRIPTION OF THE DRAWINGS

FIG. 1a is a block diagram of a wireless communication system applicable to an embodiment of this application;
FIG. 1b is a schematic diagram 1 of SSB to RO mapping applicable to an embodiment of this application;
FIG. 1c is a schematic diagram 2 of SSB to RO mapping applicable to an embodiment of this application;
FIG. 1d is a schematic diagram 1 of determining an RO group applicable to an embodiment of this application;
FIG. 1e is a schematic diagram 2 of determining an RO group applicable to an embodiment of this application;
FIG. 1f is a schematic diagram 1 of a full duplex scenario applicable to an embodiment of this application;
FIG. 1g is a schematic diagram 2 of a full duplex scenario applicable to an embodiment of this application;
FIG. 1h is a schematic diagram 1 of a transmission slot applicable to an embodiment of this application;
FIG. 1i is a schematic diagram 2 of a transmission slot applicable to an embodiment of this application;
FIG. 2 is a flowchart of a resource configuration method according to an embodiment of this application;
FIG. 3 is a flowchart of another resource configuration method according to an embodiment of this application;
FIG. 4 is a structural diagram of a resource configuration apparatus according to an embodiment of this application;
FIG. 5 is a structural diagram of another resource configuration apparatus according to an embodiment of this application;
FIG. 6 is a structural diagram of a communication device according to an embodiment of this application;
FIG. 7 is a structural diagram of a terminal according to an embodiment of this application; and
FIG. 8 is a structural diagram of a network side device according to an embodiment of this application.

### DETAILED DESCRIPTION

Technical solutions in embodiments of this application are clearly described below with reference to accompanying drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in this application are used to distinguish between similar objects rather than describe a specific order or sequence. It should be understood that the terms used in this way may be transposed where appropriate, so that embodiments of this application can be implemented in a sequence other than those illustrated or described herein. In addition, objects defined by "first" and "second" are generally of the same class and do not limit a quantity of objects. For example, one or more first objects may be arranged. In addition, "or" in this application indicates at least one of connected objects. For example, "A or B" encompasses three solutions: solution I: A is included but B is not included; solution II: B is included but A is not included; and solution III: both A and B are included. The character "/" generally indicates an "or" relationship between associated objects.

A term "indication" in this application may be a direct indication (or an explicit indication) or an indirect indication (or an implicit indication). The direct indication may be understood as that a sending party clearly informs a receiving party of specific information, an operation to be performed, or a request result in the sent indication. The indirect indication may be understood as that the receiving party determines corresponding information based on an indication sent by the sending party, or makes a determination and determines, based on a determining result, an operation that needs to be performed or a request result.

It should be noted that the technology described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. Terms "system" and "network" in embodiments of this application are usually interchangeably used, and the described technology may be used for both the system and the radio technology mentioned above, or may be used for another system and another radio technology. A new radio (New Radio, NR) system is described below as an example, and the term NR is used in most of the following description. Nevertheless, the technologies may also be applied to a system other than the NR system, such as a 6^{th} generation (6^{th} Generation, 6G) communication system.

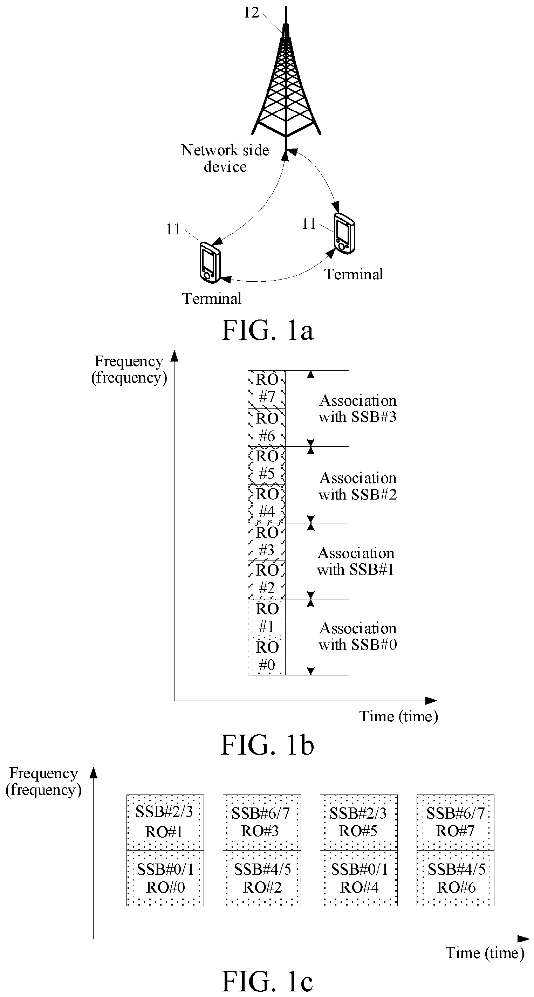

FIG. 1a is a block diagram showing a wireless communication system applicable to an embodiment of this application. The wireless communication system includes a terminal 11 and a network side device 12. The terminal 11 may be a terminal side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR), a virtual reality (Virtual Reality, VR) device, a robot, a wearable device (Wearable Device), a flight vehicle (flight vehicle), an on-board device (Vehicle User Equipment, VUE), a shipborne device, a pedestrian terminal (Pedestrian User Equipment, PUE), a smart home appliance (a home device with a wireless communication capability, such as a refrigerator, a television, a washing machine, or furniture), a game console, a personal computer (Personal Computer, PC), a teller machine, or a self-service machine. The wearable device includes a smart watch, a smart bracelet, a smart headset, smart glasses, smart jewelry (a smart bracelet, a smart chain bracelet, a smart ring, a smart necklace, a smart ankle bangle, a smart ankle chain, and the like), a smart wristband, smart clothing, and the like. The on-board device may also be referred to as an on-board terminal, an on-board controller, an on-board module, an on-board component, an on-board chip, an on-board unit, or the like. It should be noted that a specific type of the terminal 11 is not limited in embodiments of this application. The network side device 12 may include an access network device or a core network device. The access network device may also be referred to as a radio access network (Radio Access Network, RAN) device, a wireless access network function, or a wireless access network unit. The access network device may include a base station, a wireless local area network (Wireless Local Area Network, WLAN) access point (Access Point, AS), a wireless fidelity (Wireless Fidelity, Wi-Fi) node, or the like. The base station may be referred to as a node B (Node B, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or another appropriate term in the art. The base station is not limited to a specific technical term, as long as the same technical effect can be achieved. It should be noted that, in this embodiment of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in embodiments of this application, only a core network device in the NR system is used as an example, and a specific type of the core network device is not limited.

To facilitate better understanding, related concepts and principles that may be involved in embodiments of this application are described below.

### Random access procedure:

In the related art, the random access procedure may be a contention-based random access procedure or a contention-free random access procedure. The random access procedure may be a four-step random access procedure (also referred to as a Type-1 (Type-1) random access procedure) or a two-step random access procedure (also referred to as a Type-2 (Type-2) random access procedure).

In the contention-based 4-step random access procedure (Random Access Channel, RACH), a user equipment (User Equipment, UE) first sends a message 1 (Msg1) to a network, which includes a preamble (preamble). After detecting the preamble, the network sends a message 2 (Msg2)/a random access response (Random Access Response, RAR) message, which includes serial numbers of the preamble detected by the network, and an uplink radio resource allocated to the UE for sending a message 3 (Msg3). After receiving the Msg2, the UE confirms that at least one of serial numbers of a preamble carried in the Msg2 is consistent with the serial numbers of the preamble sent by the UE, and then sends, based on a resource indicated in the RAR, the Msg3 that includes contention resolution information. Upon receiving the Msg3, the network sends a message 4 (Msg4) that includes the contention resolution information. The UE receives the Msg4 and determines that the contention resolution information is consistent with the contention resolution information included in the Msg3 sent by the UE, that is, 4-step random access is completed.

The network includes uplink (uplink, UL) grant (grant) information in the RAR, which is used for indicating physical uplink shared channel (Physical Uplink Shared Channel, PUSCH) scheduling information during Msg3, and includes information such as a random access preamble identifier (RACH preamble ID, RAPID), a temporary cell radio network temporary identifier (Temporary Cell Radio Network Temporary Identifier, TC-RNTI), and a timing advance (Timing Advance, TA). If the network has not received an Msg3 PUSCH, a retransmission of the Msg3 PUSCH may be scheduled in a physical downlink control channel (Physical Downlink Control Channel, PDCCH) scrambled by the TC-RNTI.

In the contention-based random access procedure, different UEs randomly select preambles for transmission. In this way, different terminals may select the same preamble for transmission on a same time-frequency radio resource (a random access occasion (RACH Occasion, RO) resource). This case may be understood as a preamble conflict in the UE. In this case, different UEs receive a same RAR, and different UEs perform transmission of the Msg3 PUSCH based on scheduling information in an RAR UL grant. Since the related art does not support the retransmission of the Msg3 PUSCH, the network can only decode a PUSCH (including contention resolution information) sent by one UE on one Msg3 PUSCH scheduling resource. Therefore, the network is to add, to Msg4, the contention resolution information received in Msg3. If the contention resolution information in the Msg4 received by the UE matches the contention resolution information sent by the UE in the Msg3 PUSCH, the UE considers that the contention resolution is successful. If a mismatch occurs, it is considered that the contention resolution is unsuccessful.

If the contention resolution is unsuccessful, the UE reselects a RACH transmission resource and performs transmission on the physical random access channel (Physical Random Access Channel, PRACH) for a next random access attempt.

In an NR Release 16 (Release 16, Rel-16), a two-step random access procedure (2-step RACH) is introduced. First, a UE sends a message A (MsgA) to a network side. After receiving the MsgA, the network side sends a message B (MsgB) to the UE. If the UE does not receive MsgB within a specific period of time, the UE increments a counter for counting a quantity of MsgA transmissions by one and retransmits the MsgA. If the counter counting the quantity of MsgA transmissions reaches a specific threshold, the UE may switch from the 2-step random access procedure to a 4-step random access procedure. The MsgA includes an MsgA preamble part and an MsgA PUSCH part. The preamble part is sent on the RO configured for the 2-step RACH, and the PUSCH part is sent on an MsgA PUSCH resource associated with an MsgA preamble and the RO. The MsgA PUSCH resource is a set of PUSCH resources configured relative to each PRACH slot (slot), including time-frequency resources and demodulation reference signal (Demodulation Reference Signal, DMRS) resources.

Selection of random access resources and synchronization signal block (Synchronization Signal and PBCH block, SSB)-to-RO mapping:
In NR, a cell may configure a plurality of frequency division multiplexed (Frequency Division Multiplexed, FDM) physical random access channel transmission occasions (PRACH transmission occasion, or referred to as PRACH Occasion, physical random access channel occasion) at a time domain position for PRACH transmission. For simplicity herein, the PRACH occasion is referred to as RO for short. At a moment, a quantity of ROs that may be used for performing FDM may be: {1, 2, 4, 8}. As shown in FIG. 1b, at a moment, 8 RO resources are distributed on different frequencies.

A random access preamble (Preamble) can only be transmitted on time-domain resources (that is, RO resources) configured by a PRACH configuration index (ConfigurationIndex) parameter, and the random access preamble can only be transmitted on frequency-domain resources configured by the PRACH-FDM parameter, a PRACH frequency-domain resource *n*_{RA} ∈ {0,1,..., *M* -1} , where M is equal to the higher-layer parameter PRACH-FDM. During initial access, PRACH frequency-domain resources *n*_{RA} are numbered in ascending order starting from an RO resource with a lowest frequency within an initial active uplink bandwidth part (initial active uplink bandwidth part); otherwise, the PRACH frequency-domain resources *n*_{RA} are numbered in ascending order starting from the RO resource with the lowest frequency within an active uplink bandwidth part. As shown in FIG. 1b, the RO resources are consecutively numbered as RO#0 to RO#7 in ascending order of frequencies.

In NR, an association relationship exists between the RO and an actually transmitted SSB. One SSB may be associated with a plurality of ROs, or a plurality of SSBs may be associated with 1 RO (in this case, different SSBs correspond to different Preamble codes). Generally, a base station may use different beams to send different SSBs, and a corresponding UE sends Preambles on ROs associated with the SSBs. In this way, the UE selects, based on strength of a received downlink beam/SSB, an RO/"RO and preamble combination" associated with an SSB with favorable signal strength, and sends Msg1. In this way, the network may determine, based on the received RO of the Preamble/the "RO and preamble combination", the SSB selected by the UE, and sends Msg2 on a downlink beam corresponding to the SSB, to ensure reception quality of a downlink signal.

FIG. 1b is used as an example. 8 ROs are used for FDM at a moment, and 4 SSBs are actually transmitted, that is, SSB#0, SSB#1, SSB#2, and SSB#3. Each SSB is associated with 2 ROs. If a UE determines to send a PRACH/Msg1/preamble on the RO corresponding to SSB#0, the UE selects one RO from RO#0 and RO#1 to send the PRACH.

FIG. 1c is used as an example. 2 ROs are used for FDM at a moment, and 8 SSBs are actually transmitted, that is, SSB#0, SSB#1, ..., and SSB#7. Every 2 SSBs are associated with 1 RO. When a plurality of SSBs share one RO, preamble sets associated with the plurality of SSBs are different. In other words, a same preamble cannot belong to preamble sets associated with different SSBs at the same time. RO#0 in FIG. 1c is used as an example, which has 60 preambles associated with the SSBs, where preambles with indexes of 0-29 are associated with SSB#0, and preambles with indexes of 30-59 are associated with SSB#1.

Before sending the PRACHs, the UE first performs resource selection, that is, first selects, based on reference signal received power (Reference Signal Received Power, RSRP) of a received beam (beam)/SSB, an SSB with the RSRP higher than a threshold. If the RSRP of a plurality of SSBs is higher than the threshold, the terminal may select any SSB with the RSRP higher than the threshold. If no SSB with the RSRP higher than the threshold exists, the UE selects an SSB based on implementation.

Based on configuration of a network (Network, NW), the UE obtains a correspondence between the SSB and the RO. After the SSB is selected, the RO corresponding to the selected SSB is used as an RO for performing/sending the PRACH/Preamble. If the selected SSB is associated with a plurality of ROs, the terminal may select one of the ROs to send the PRACH/Preamble.

For example, in an embodiment shown in FIG. 1b, assuming that the UE selects SSB#1, the UE may select one of RO#2 and RO#3 to send the PRACH/Preamble. In an example shown in FIG. 1c, assuming that the UE selects SSB#1, the UE may select an available RO closest to a current time from ROs (RO#0 or RO#4) associated with SSB#1, to perform the PRACH/send Preamble.

In the selected RO, the UE selects a preamble from a preamble set associated with the selected SSBs to perform sending through the PRACH. As shown in FIG. 1c, if one RO is associated with 2 SSBs, and then preambles in available Preamble sets in the RO that are associated with the SSBs are divided into two subsets. Each subset corresponds to one SSB. The UE selects a preamble sequence in the preamble subset corresponding to the selected SSB for transmission through PRACH.

In the related 5^{th} generation mobile communication technology (5^{th} Generation Mobile Communication Technology, 5G), the following rules are used for resolving a conflict between the PRACH and another signal or time division duplex (TDD) configuration:
If a group of PRACH occasions or PRACH sequences is not mapped to an SS/PBCH block index (SSB index) after an integer number of mapping cycles (mapping cycle) of SS/PBCH block (SSB) indexes to PRACH occasions within the association period, then no SS/PBCH block index is mapped to the PRACH occasions or PRACH sequences. These PRACH resources cannot be used for transmission on the PRACH.

The association pattern period includes one or more association periods and is determined such that a pattern between PRACH occasions and SS/PBCH block indexes (SSB indexes) repeats at most once every 160 milliseconds. PRACH occasions (if any) that are not associated with the SS/PBCH block indexes after an integer quantity of association periods are not used for PRACH transmission.

If an MsgA PUSCH occasion does not overlap any valid PRACH occasions related to a first-type random access procedure or a second-type random access procedure in both time and frequency, the MsgA PUSCH occasion is valid. This means that when PRACH and MsgA PUSCH resources overlap, transmission is performed on the PRACH instead of an MsgA PUSCH.

For an operation on a single carrier in unpaired spectrum (time division duplex (Time Division Duplex, TDD)), if the UE is configured by a higher layer to receive the PDCCH, a physical downlink shared channel (Physical downlink shared channel, PDSCH), a channel state information reference signal (Channel State Information Reference Signal, CSI-RS), or a downlink positioning reference signal (Downlink Positioning Reference Signal, DL-PRS) in a set of symbols in a specific slot (slot), then if the UE does not detect a downlink control information (Downlink Control Information, DCI) format that indicates the UE to send a PUSCH, a physical uplink control channel (Physical Uplink Control Channel, PUCCH), the PRACH, or a sounding reference signal (Sounding Reference Signal, SRS) in at least one symbol of the set of symbols, the UE receives the PDCCH, the PDSCH, the CSI-RS, or the DL-PRS; otherwise the UE does not receive the PDCCH, the PDSCH, the CSI-RS, or the DL-PRS.

For the operation on the single carrier in the unpaired spectrum, if the UE is configured by the higher layer to send the SRS, the PUCCH, the PUSCH, or the PRACH in the set of symbols of the slot, and the UE detects the DCI format that indicates the UE to receive a CSI-RS or a PDSCH from a subset of the set of symbols, then
if the UE does not have a capability of [partial cancellation (partial Cancellation)], then if a time interval between the first symbol in the set (a set of symbols for sending the SRS, the PUCCH, the PUSCH, or the PRACH) and a last symbol of a control resource set (Control resource set, CORESET) in the DCI format detected by the UE does not exceed *T*_{*proc,*2}, the UE does not expect to cancel the transmission of the PUCCH, or the PUSCH, or the PRACH in the set; otherwise the UE cancels PRACH transmission, or decides to cancel actual repeated transmission of the PUCCH, the PUSCH, or the PRACH according to relevant protocols.

If the UE has a capability of [partial cancellation (partial Cancellation], then if the time interval between a part of symbols in the set (a set of symbols for transmitting the SRS, the PUCCH, the PUSCH, or the PRACH) and the last symbol of the CORESET in the DCI format detected by the UE does not exceed *T*_{*proc,*2}, the UE does not expect to cancel the transmission of the PUCCH, or the PUSCH, or the PRACH on the part of symbols. For symbols other than the part of symbols, the UE cancels the PRACH transmission, or decides to cancel the actual repeated transmission of the PUCCH, the PUSCH, or the PRACH according to relevant protocols.

### PRACH repetition:

The PRACH repetition is introduced into the NR Rel-18 of the 3^{rd} generation partnership project (3^{rd} Generation Partnership Project, 3GPP). For the PRACH repetition, the UE needs to repeatedly send a preamble on a plurality of ROs at different time domain positions associated with the same SSB. A quantity of PRACH repetitions may be {2, 4, 8}. After determining the quantity of PRACH repetitions, the UE needs to determine a set of ROs, and a quantity of valid ROs in the set of ROs is equal to the quantity of PRACH repetitions.

It is assumed that the quantity of PRACH repetitions is N1, and a rule for determining an entire RO group within a time window X is: first, a starting RO of a first RO group is determined, and then remaining N-1 ROs of the first RO group are determined. Then a starting RO and remaining ROs of another RO group are determined in sequence. The remaining N1-1 ROs in each RO group are ROs that are associated with the same SSB, at the same frequency position, and with the same associated Preamble set as the starting RO. After the first RO group is determined, determination of the remaining RO groups is related to whether a time offset (time offset) is configured.

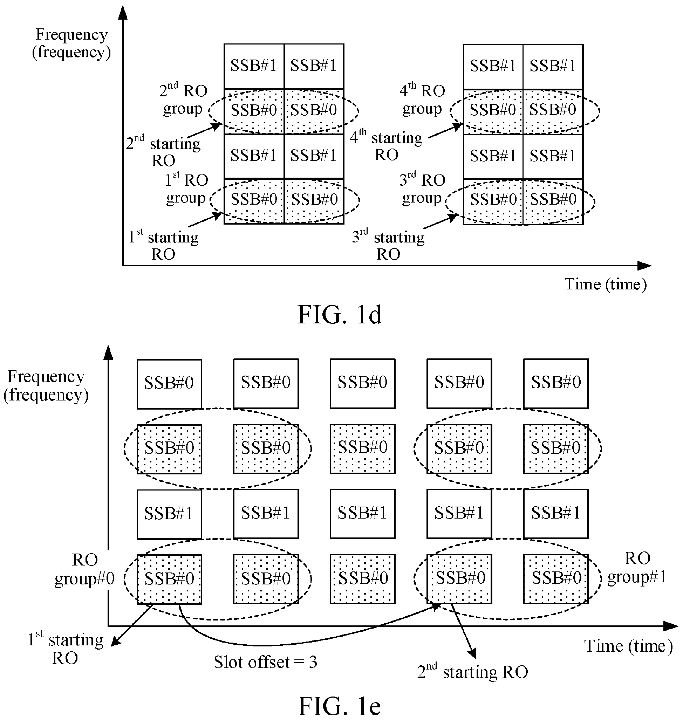

If the time offset is not configured, for each SSB, the first valid RO within the time window X is used as a starting RO of the first RO group, and the first RO group is determined based on the starting RO. Then, on the other ROs except for the previous RO group, starting ROs of subsequent RO groups are determined in the order of increasing frequency domain positions prior to increasing time domain positions within the time window X, and the subsequent RO group is further determined. For example, in FIG. 1d, assuming that the quantity of PRACH repetitions is 2, and for SSB#0, it may be determined that the RO group is shown in FIG. 1d.

If the time offset (time offset) is configured, for each SSB, the first valid RO found within the time window X in the order of frequency domain first and then time domain is used as the starting RO of the first RO group, and then the first RO group is determined based on the starting RO. Then, on the other ROs except for the previous RO group, the starting RO of the subsequent RO group is determined in the order of frequency domain first and then time domain. For the same SSB, a starting RO of an n^{th} RO group at the same frequency position is an RO that is at a time offset from a starting RO of an (n-1)^{th} RO group at the frequency position. A definition of the time offset is a quantity of valid ROs associated with the same SSB in the time domain. For example, in the following FIG. 1e, assuming that the quantity of PRACH repetitions is 2, and the time offset is equal to 3, for SSB#0, it may be determined that the RO group is shown in FIG. 1e.

### Duplex (duplex) mode enhancement:

In a 5G mobile communication system, enhancement technologies have been developed for full duplex (full duplex) to adapt to diverse scenarios and service requirements. Main scenarios of 5G include an enhanced mobile broadband (Enhanced Mobile Broadband, eMBB), an ultra-reliable low-latency communication (Ultra-Reliable Low-Latency Communication, URLLC), and massive machine type communication (Massive Machine Type Communication, mMTC). These scenarios impose requirements such as high reliability, a low latency, a large bandwidth, and wide coverage on the system.

In the NR, configuring a full duplex operation can significantly improve delay and coverage performance of a TDD system.

Subband non-overlapping full duplex (subbands non-overlapping Full duplex) may improve transmission delay and enhance coverage.

For a DL slot (configured by tdd-UL-DL-ConfigurationCommon or tdd-UL-DL-ConfigurationDedicated), a network configures a DL bandwidth part (Bandwidth Part, BWP) for the UE. For a UL slot, the network configures a UL BWP for the UE.

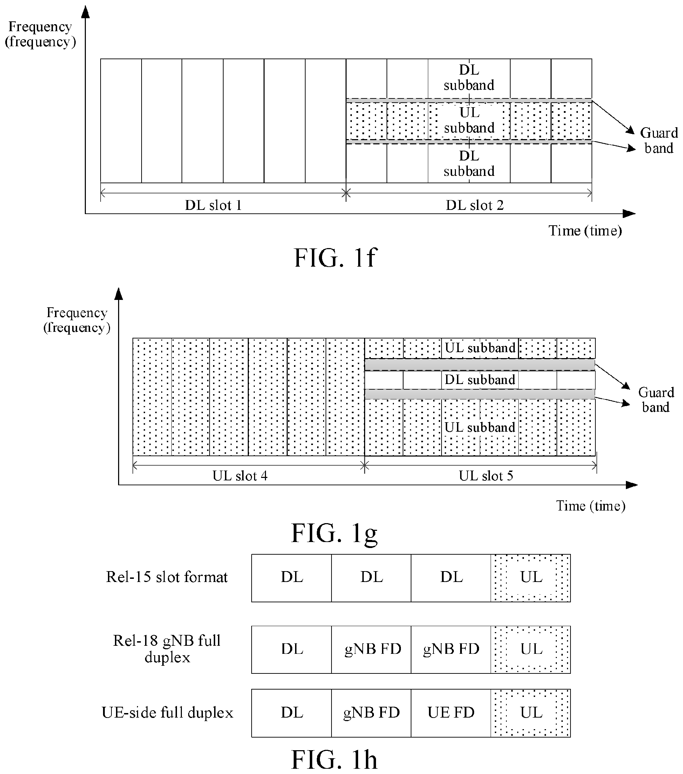

For a full duplex scenario, as shown in FIG. 1f, the following cases may exist:
Case 1: A DL BWP, that is, a slot (slot) 1, is configured; and
Case 2: A DL BWP and a UL subband, that is, a slot 2, are configured.

For the UL slot (configured by tdd-UL-DL-ConfigurationCommon or tdd-UL-DL-ConfigurationDedicated), as shown in FIG. 1g, the following cases may exist:
Case 3: A UL BWP, that is, a slot 4, is configured; and
Case 2: A UL BWP and a DL subband, that is, a slot 5, are configured.

For a subband full duplex (SubBand non-overlapping Full Duplex, SBFD) operation, an SBFD subband consists of 1 resource block (Resource Block, RB) or a set of consecutive RBs that have a same transmission direction.

A time unit (for example, a slot or a symbol) in which a base station (the next Generation Node B, gNB) uses an SBFD operation may be referred to as an SBFD time unit (for example, a slot or a symbol).

Refer to FIG. 1h. For Rel-15, the base station and the UE can only perform sending or receiving at one moment.

For Rel-18 gNB-side full duplex, the gNB may perform receiving and sending at the same time, and a UE side can only use a half-duplex mode, that is, can only perform sending or receiving at one moment.

For UE-side full duplex, the gNB and the UE may perform receiving and sending at the same time.

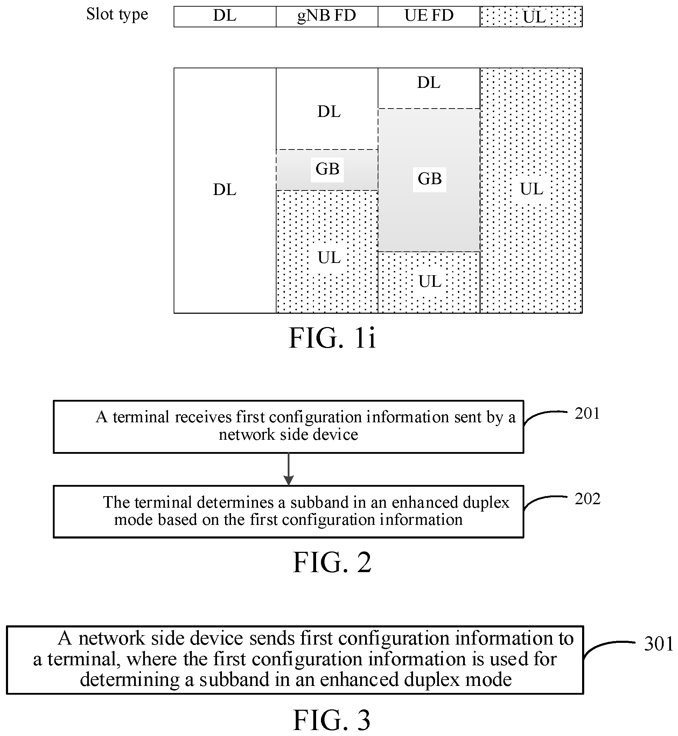

For the UE-side full duplex, a larger guard band (guard band, GB) (greater than a GB of base station FD) may be needed to suppress self-interference, as shown in FIG. 1i.

For a communication device, simultaneous UL reception and DL transmission may cause self-interference. To ensure transmission in an interfered direction, the communication device needs to have a self-interference cancellation capability, for example, reserving a guard band between a receiving band and a sending band. However, this reduces throughput of the UE.

Currently, duplex enhancement mainly considers a connected (connected) UE, and the network side supports full duplex and the UE side supports half duplex.

To improve flexible use of a duplex mode by the UE in an idle state (idle) or an inactive state (inactive), the enhanced duplex mode may be configured in the UE idle/inactive state, or dynamically configured in a random access stage. In this case, how to configure an enhanced duplex mode suitable for a cell level needs to be considered. In addition, it is necessary to consider whether PRACH transmission may be performed on the newly configured subband, and how to configure a plurality of PRACH resource types introduced accordingly. In addition, it is necessary to consider how to determine an RO group used for repetition during repeated transmission of the PRACH, and the like.

A resource configuration method and apparatus, and a related device provided in embodiments of this application are described in detail below through some embodiments and application scenarios thereof with reference to the accompany drawings.

Refer to FIG. 2. FIG. 2 is a flowchart of a resource configuration method according to an embodiment of this application. The method is applied to a terminal. As shown in FIG. 2, the method includes the following steps:
Step 201: A terminal receives first configuration information sent by a network side device.

The first configuration information is used for determining a subband in an enhanced duplex mode. In this embodiment of this application, the enhanced duplex mode may be an SBFD mode, or a mode in which a network side supports full duplex and a UE side supports half duplex, or another duplex mode different from time division duplex (Time Division Duplex, TDD) or frequency division duplex (Frequency Division Duplex, FDD).

Step 202: The terminal determines the subband in the enhanced duplex mode based on the first configuration information.

The first configuration information includes at least one of the following:
a period of the enhanced duplex mode;
a width of the subband;
a starting frequency domain position of the subband, for example, a starting physical resource block (Physical Resource Block, PRB);
a size of a guard band between the subband and another bandwidth, where the another bandwidth is a bandwidth other than the subband among bandwidths configured in the enhanced duplex mode;
an attribute of the subband, where the attribute is related to a transmission direction, for example, a downlink subband of an uplink slot or an uplink subband of a downlink slot; and
a slot mode of the subband configured within the period of the enhanced duplex mode.

For example, the network side device may configure the starting frequency domain position of the subband in the enhanced duplex mode through first configuration information, so that the terminal can determine the subband in the enhanced duplex mode based on the first configuration information. Alternatively, the first configuration information sent by the network side device further includes the width of the subband, so that the terminal can determine a specific frequency domain position of the subband in the enhanced duplex mode based on the width of the subband and the starting frequency domain position of the subband.

Alternatively, the first configuration information may further include a period of the enhanced duplex mode and the starting frequency domain position of a subband. The terminal can determine, based on the first configuration information, in which time units the enhanced duplex mode is in operation, and the frequency domain position of the subband in the enhanced duplex mode.

Alternatively, the first configuration information may include the starting frequency domain position of the subband in the enhanced duplex mode, and a size of a guard band between the subband and another bandwidth, so that the terminal can determine, based on the first configuration information, the frequency domain position of the subband in the enhanced duplex mode and a frequency domain position of the another bandwidth.

For another example, the first configuration information may be a slot mode of the subband configured within a period of the enhanced duplex mode. For example, the network side device may configure a mode, or the network side device may indicate a mode in a set of slot modes stipulated by a protocol, to determine which slots are configured with corresponding subbands within the period of the enhanced duplex mode, so that the terminal can determine the subband in the enhanced duplex mode based on the first configuration information. Alternatively, slots of subbands in the enhanced duplex mode configured by the first configuration information are all downlink slots or all uplink slots, or a subset of uplink slots or a subset of downlink slots is determined based on a mode.

It may be understood that specific information content included in the first configuration information may be further another possible case. This is not listed in detail in embodiments of this application.

In embodiments of this application, the network side device sends the first configuration information, so that the terminal can determine the subband in the enhanced duplex mode based on the first configuration information, thereby defining how to configure frequency-domain resources on the terminal side in the enhanced duplex mode, to enable the terminal to flexibly use the duplex mode, and effectively improve transmission flexibility and transmission performance of the terminal.

It should be noted that a state of the terminal is not limited in embodiments of this application. For example, the terminal may be a terminal in all states, including the UE in a connected state (connected), the UE in an idle state (idle), or the UE in an inactive state (inactive). For example, the network side device may broadcast the first configuration information, so that the terminal that has received the first configuration information can determine the subband in the enhanced duplex mode based on the first configuration information, to effectively improve transmission performance of the terminal.

Alternatively, in embodiments of this application, the terminal is a terminal in the idle state or in the inactive state, so that the terminal in the idle state or in the inactive state can determine the subband in the enhanced duplex mode based on the first configuration information. In this way, this enables the enhanced duplex mode to be configured when the terminal is in the idle state or the inactive state, so that the terminal can flexibly use the duplex mode in the idle state or in the inactive state, to improve transmission performance of the terminal in the idle state or in the inactive state.

Optionally, when the first configuration information includes the size of the guard band between the subband and another bandwidth, the terminal satisfies any one of the following:
the terminal is in an SBFD mode; and
the terminal is in a half duplex (Half Duplex, HD) mode.

It should be noted that for a network side (gNB) SBFD slot, when the terminal performs SBFD and the terminal performs HD, the size of the guard band between the subband configured by the network side device and another bandwidth may be different. In this case, configuration may be separately performed for the two modes.

Optionally, the first configuration information is sent through at least one of the following:
a system message, for example, an additional system message field may be introduced in a system message block (System Information Block, SIB) 1 to indicate the first configuration information;
a dedicated terminal message;
a physical downlink control channel PDCCH;
a physical random access channel PRACH configuration; and
a dedicated configuration table, where the dedicated configuration table is used to specify the first configuration information, and the dedicated configuration table may be configured by the network side device, or may be defined by a protocol.

For example, the first configuration information may be sent through the dedicated (Dedicated) terminal message. For example, for the terminal in the inactive state, after the terminal enters radio resource control (Radio Resource Control, RRC) release (release), the first configuration information may be configured in an RRC release message, and some channels are scheduled to an additionally configured subband in an enhanced duplex mode, to reduce transmission delay. For another example, in a contention-free random access (Contention Free Random Access, CFRA) procedure triggered by a higher layer, the first configuration information may be configured in corresponding high-layer signaling, and some signal transmissions are performed in the additionally configured subband in the enhanced duplex mode, to reduce delay. The high-layer signaling may be a handover command (handover command), a beam failure recovery (Beam Failure Recovery, BFR) configuration, or the like.

Alternatively, the first configuration information may be further sent through a PDCCH. For example, in a PDCCH-ordered CFRA procedure, the first configuration information may be sent through a corresponding PDCCH order.

Alternatively, the first configuration information may be further sent through PRACH configuration. For example, an uplink subband in a downlink slot is determined based on an RO that appears in the downlink slot, to serve as the subband in the enhanced duplex mode. For another example, all PRBs occupied by the corresponding RO appearing on the downlink slot configured for the RO are deemed to be configured as the uplink subband, and the RO is deemed valid.

The PRACH configuration includes a PRACH configuration table, and the PRACH configuration table includes the first configuration information. For example, a column of information may be added to the PRACH configuration table, to indicate which slots may include the configuration of the subband in the enhanced duplex mode, and the size and the frequency domain position of the subband. The column of information added to the PRACH configuration table is the first configuration information.

In embodiments of this application, the first configuration information may include the size of the guard band between the subband and another bandwidth in the enhanced duplex mode. Optionally, the guard band between the subband and the another bandwidth is determined based on at least one of the following:
a guard band configured in the PRACH configuration table; and
at least one RO.

In other words, the guard band between the subband and the another bandwidth may be configured in the PRACH configuration table, or at least one RO may be used as the guard band between the subband and the another bandwidth.

Optionally, the at least one RO is at least one RO at an edge of a bandwidth occupied by a PRACH.

Optionally, when the guard band between the subband and the another bandwidth is determined based on the at least one RO, the RO satisfies any one of the following:
the RO is a valid RO, and the RO is capable of being used for implementing SSB to RO mapping but not for actual PRACH transmission;
the RO is a valid RO, and the RO is capable of being used for implementing the SSB to RO mapping, but whether the RO is used for actual PRACH transmission depends on a first condition; and
the RO is not a valid RO, and the RO is not used for implementing an SSB to RO mapping.

Optionally, the first condition includes at least one of the following:
whether a time interval or a frequency domain interval between the RO and an SSB is less than or equal to a preset value, for example, if the time interval or the frequency domain interval between the RO and the SSB is less than or equal to the preset value, the RO is used for actual transmission of the PRACH;
whether an SSB or another downlink common channel or signal is sent on the another bandwidth, for example, if an SSB or another downlink common channel or signal is sent on the another bandwidth, the RO is used for actual transmission of the PRACH; and
whether the terminal receives an SSB or another downlink common channel or signal on the another bandwidth, for example, if the terminal receives an SSB or another downlink common channel or signal on the another bandwidth, the RO is used for actual transmission of the PRACH.

It should be noted that the SSB and the SS/PBCH block may be used interchangeably. The SSB may also be any signal module including at least a synchronization signal and/or a downlink broadcast channel.

In embodiments of this application, the method may further include:
The terminal receives second configuration information sent by a network side device. The second configuration information is used for configuring at least one RO type, and the at least one RO type includes at least one of the following:
an RO existing in an uplink slot;
an RO existing in a slot with a flexible (flexible) symbol;
an RO existing in an uplink subband of a downlink slot; and
an RO not existing in an uplink subband of a downlink slot.

In embodiments of this application, the network side device configures at least one RO type through the second configuration information, so that the terminal can determine the at least one RO type in the enhanced duplex mode based on the second configuration information. According to the solution provided in embodiments of this application, the configuration manner of RO resources in the enhanced duplex mode is defined and specified. This is more conducive to improving transmission performance of the terminal.

Optionally, when the at least one RO type includes the RO existing in the uplink subband of the downlink slot, no SSB exists in the downlink slot, or an SSB exists in the downlink slot.

Optionally, the at least one RO type is configured through any one of the following:
an independent PRACH configuration resource, where different RO types are configured through different independent PRACH configuration resources; and
a common PRACH configuration resource, where different RO types are configured through the common PRACH configuration resource.

For example, the one or more RO types may be configured through the independent PRACH configuration resource. For example, a PRACH resource in an uplink subband may be configured through a PRACH configuration resource 1, and a PRACH resource in a non-uplink subband may be configured through a PRACH configuration resource 2.

Alternatively, the one or more RO types may be configured through the common PRACH configuration resource. For example, two different RO types may be configured through a same PRACH configuration resource (that is, the common PRACH configuration resource): the PRACH resource in the uplink subband and the PRACH resource in the non-uplink subband.

In embodiments of this application, two configuration manners of the RO types are effectively defined, so that the configuration of the RO type is more flexible.

Optionally, in the case of PRACH repetition, the method further includes:
The terminal determines an RO group from the at least one RO type based on the second configuration information, to determine a resource for at least one PRACH transmission, where the determining of the RO group satisfies at least one of the following:
the RO group includes different RO types;
the RO group includes a same RO type;
the RO types included in the RO group are mapped to a same downlink reference signal; and
the RO types included in the RO group are mapped to different downlink reference signals.

It may be understood that the second configuration information is used for configuring at least one RO type. After receiving the second configuration information sent by the network side device, the terminal can determine an RO group from the at least one configured RO type based on the second configuration information. The RO group may refer to a set of RO types that includes a plurality of RO types (which may be the same or different).

For example, the RO group determined by the terminal may include different RO types. For example, the RO group includes the RO existing in the uplink slot, and also includes the RO existing in the uplink subband of the downlink slot.

Alternatively, the RO group determined by the terminal needs to include the same RO type. For example, two sets of ROs included in the RO group are both ROs existing in the uplink slot. For another example, the terminal determines a plurality of RO groups, and the plurality of RO groups all include the ROs existing in the uplink slot.

Alternatively, the RO types included in the RO group determined by the terminal are mapped to the same downlink reference signal, or may be mapped to different downlink reference signals. For example, the RO group determined by the terminal includes the RO that exists in the uplink slot and the RO that exists in a slot with a flexible symbol. The two RO types are both mapped to the same downlink reference signal, or the two RO types may also be mapped to different downlink reference signals. The downlink reference signal includes but is not limited to the SSB, a channel state information reference signal (Channel State Information-Reference Signal, CSI-RS), or the like.

In embodiments of this application, in the enhanced duplex mode, a mapping manner from a reference signal to an RO further needs to be defined.

Optionally, in the enhanced duplex mode, an association between a reference signal and the RO satisfies at least one of the following:
different RO types or RO resources are separately associated with the SSB;
at least two different RO types or RO resources are associated with the SSB together; and
the RO is not associated with the SSB when the RO and the SSB overlap in a time domain.

For example, different RO types or RO resources are separately associated with the SSB. To be specific, different RO types or RO resources are associated with the SSB respectively instead of simultaneously. In this case, one SSB may be associated with ROs of a plurality of types more quickly. For example, some ROs are on a subband, and some ROs are on a normal uplink bandwidth, and then an RO that is associated with the same SSB on the subband and the uplink bandwidth and that is closer or more compact in time may be selected to determine a PRACH for resource transmission. This helps complete a plurality of PRACH transmissions or PRACH repetitions with low delay.

Alternatively, different RO types or RO resources are associated with the SSB together. To be specific, different RO types or RO resources may be associated with the SSB at the same time. In this case, the association with the SSB can be completed without the need to distinguish between different RO types, so that complexity of the association between the SSB and the RO can be reduced.

In addition, if the RO overlaps with one SSB in time domain, the RO is not associated with the SSB. For example, for an RO on a subband, if an SSB appears on a same orthogonal frequency division multiplex (Orthogonal frequency division multiplex, OFDM) symbol (symbol), it may be considered that the RO is invalid, and the RO is not associated with the SSB. This may reduce interference to the SSB.

In embodiments of this application, for the association between the SSB and the RO, various corresponding periods or windows further need to be determined.

Optionally, when the RO types or the RO resources are associated with the SSB, for example, different RO types or RO resources are separately associated with the SSB, or different RO types or RO resources are associated with the SSB together, the method further includes:
The terminal determines a first time period or a first window. The first window includes a determining window of a PRACH group, and the first time period includes at least one of the following:
an SSB to RO mapping cycle (SSB to RO mapping cycle);
an SSB to RO association period (SSB to RO association period); and
an SSB to RO association pattern period (SSB to RO association pattern period).

Optionally, the terminal may automatically determine the first time period or the first window, or may determine the first time period or the first window based on an instruction of a network side device. In the case of PRACH repetition, the terminal needs to determine a determining window of the PRACH group, that is, the first window.

In embodiments of this application, in the enhanced duplex mode, for an SSB to RO association, the terminal can determine the SSB to RO mapping cycle, or the SSB to RO association period, or the SSB to RO association pattern period, so that time information of the SSB to RO association can be effectively determined. This helps the terminal determine a random access channel occasion, to improve transmission performance of the terminal. In addition, for the case of PRACH repetition, the terminal determines the determining window of the PRACH group. This helps the terminal determine which time for performing PRACH transmission, to improve transmission performance of the terminal.

Optionally, the first time period or the first window is determined through at least one of the following:
respective corresponding first time periods or first windows are determined based on different RO types or RO resources;
a common first time period or first window is determined based on at least two different RO types or RO resources; and
the determining is performed based on the period of the enhanced duplex mode.

For example, respective corresponding first time periods or first windows of different RO types or RO resources are determined. For example, the first time period is used as an example. For the RO that exists in the uplink slot, the terminal determines a first time period corresponding to the RO (that is, the SSB to RO mapping cycle, or the SSB to RO association period, or the SSB to RO association pattern period). For an RO that exists in a slot with a flexible symbol, the terminal determines a first time period corresponding to the RO type. No many examples are listed herein. This enables the terminal to flexibly determine the first time periods or the first windows respectively corresponding to different RO types or RO resources.

Alternatively, a common first time period or first window may be determined for different RO types or RO resources. For example, all RO types or RO resources may correspond to a same first time period or first window. For example, when SSB to RO mapping (association) is independently performed on each RO type, that is, when different RO types or RO resources are separately associated with the SSB, a maximum value of a time period determined based on all RO types may be used as the first time period. To be specific, all RO types correspond to the first time period finally. For another example, when the SSB to RO mapping (association) is performed for all RO types together, that is, when different RO types or RO resources are associated with the SSB together, all RO types or RO resources jointly determine a common time period or window, that is, the first time period or the first window.

Alternatively, the first time period or the first window may be further determined based on a period of the enhanced duplex mode. For example, the first time period or the first window is less than the period of the enhanced duplex mode.

In embodiments of this application, in the enhanced duplex mode, for the SSB to RO association, a determining method of the SSB to RO mapping cycle, or the SSB to RO association period, or the SSB to RO association pattern period, or the determining window of the PRACH group is specified. This helps reduce random access delay of the terminal, and improves transmission performance of the terminal.

Refer to FIG. 3. FIG. 3 is a flowchart of another resource configuration method according to an embodiment of this application. The method is applied to a network side device. As shown in FIG. 3, the method includes the following steps:
Step 301: A network side device sends first configuration information to a terminal. The first configuration information is used for determining a subband in an enhanced duplex mode, and the first configuration information includes at least one of the following:
a period of the enhanced duplex mode;
a width of the subband;
a starting frequency domain position of the subband;
a size of a guard band between the subband and another bandwidth, where the another bandwidth is a bandwidth other than the subband among bandwidths configured in the enhanced duplex mode;
an attribute of the subband, where the attribute is related to a transmission direction; and
a slot mode of the subband configured within the period of the enhanced duplex mode.

Optionally, when the first configuration information includes the size of the guard band between the subband and another bandwidth, the terminal satisfies any one of the following:
the terminal is in an SBFD mode; and
the terminal is in an HD mode.

Optionally, the first configuration information is sent through at least one of the following:
a system message;
a dedicated terminal message;
a physical downlink control channel PDCCH;
a physical random access channel PRACH configuration; and
a dedicated configuration table, where the dedicated configuration table is used to specify the first configuration information.

The PRACH configuration includes a PRACH configuration table, and the PRACH configuration table includes the first configuration information.

Optionally, the guard band between the subband and the another bandwidth is determined based on at least one of the following:
a guard band configured in the PRACH configuration table; and
at least one random access channel occasion RO.

Optionally, the at least one RO is at least one RO at an edge of a bandwidth occupied by a PRACH.

Optionally, when the guard band between the subband and the another bandwidth is determined based on the at least one RO, the RO satisfies any one of the following:
the RO is a valid RO, and the RO is capable of being used for implementing SSB to RO mapping but not for actual PRACH transmission;
the RO is a valid RO, and the RO is capable of being used for implementing the SSB to RO mapping, but whether the RO is used for actual PRACH transmission depends on a first condition; and
the RO is not a valid RO, and the RO is not used for implementing an SSB to RO mapping.

Optionally, the first condition includes at least one of the following:
whether a time interval or a frequency domain interval between the RO and an SSB is less than or equal to a preset value;
whether an SSB or another downlink common channel or signal is sent on the another bandwidth; and
whether the terminal receives an SSB or another downlink common channel or signal on the another bandwidth.

Optionally, the method further includes:
The network side device sends second configuration information to the terminal. The second configuration information is used for configuring at least one RO type, and the at least one RO type includes at least one of the following:
an RO existing in an uplink slot;
an RO existing in a slot with a flexible symbol;
an RO existing in an uplink subband of a downlink slot; and
an RO not existing in an uplink subband of a downlink slot.

Optionally, when the at least one RO type includes the RO existing in the uplink subband of the downlink slot, no synchronization signal block SSB exists in the downlink slot, or an SSB exists in the downlink slot.

Optionally, the at least one RO type is configured through any one of the following:
an independent PRACH configuration resource, where different RO types are configured through different independent PRACH configuration resources; and
a common PRACH configuration resource, where different RO types are configured through the common PRACH configuration resource.

Optionally, in the case of PRACH repetition, the method further includes:
The network side device determines an RO group from the at least one RO type, to determine a resource for at least one PRACH transmission, where the determining of the RO group satisfies at least one of the following:
the RO group includes different RO types;
the RO group includes a same RO type;
the RO types included in the RO group are mapped to a same downlink reference signal; and
the RO types included in the RO group are mapped to different downlink reference signals.

Optionally, in the enhanced duplex mode, an association between a reference signal and the RO satisfies at least one of the following:
different RO types or RO resources are separately associated with the SSB;
at least two different RO types or RO resources are associated with the SSB together; and
the RO is not associated with the SSB when the RO and the SSB overlap in a time domain.

Optionally, when the RO types or RO resources are associated with the SSB, the method further includes:
The network side device determines a first time period or a first window, where the first window includes a determining window of a PRACH group, and the first time period includes at least one of the following:
an SSB to RO mapping cycle;
an SSB to RO association period; and
an SSB to RO association pattern period.

Optionally, the first time period or the first window is determined through at least one of the following:
respective corresponding first time periods or first windows are determined based on different RO types or RO resources;
a common first time period or first window is determined based on at least two different RO types or RO resources; and
the determining is performed based on the period of the enhanced duplex mode.

In embodiments of this application, the network side device sends the first configuration information, so that the terminal can determine the subband in the enhanced duplex mode based on the first configuration information, thereby defining how to configure frequency-domain resources on the terminal side in the enhanced duplex mode, to enable the terminal to flexibly use the duplex mode, and effectively improve transmission flexibility and transmission performance of the terminal.

It should be noted that the resource configuration method applied to the network side device provided in embodiments of this application corresponds to the foregoing method applied to the terminal side. For the relevant concepts and specific processes involved in embodiments of this application, reference may be made to the descriptions of the foregoing method embodiment on the terminal side. To avoid repetition, details are not described again in embodiments of this application.

The resource configuration method provided in embodiments of this application may be performed by a resource configuration apparatus. In embodiments of this application, the resource configuration apparatus provided in embodiments of this application is described through an example in which the resource configuration apparatus performs the resource configuration method.

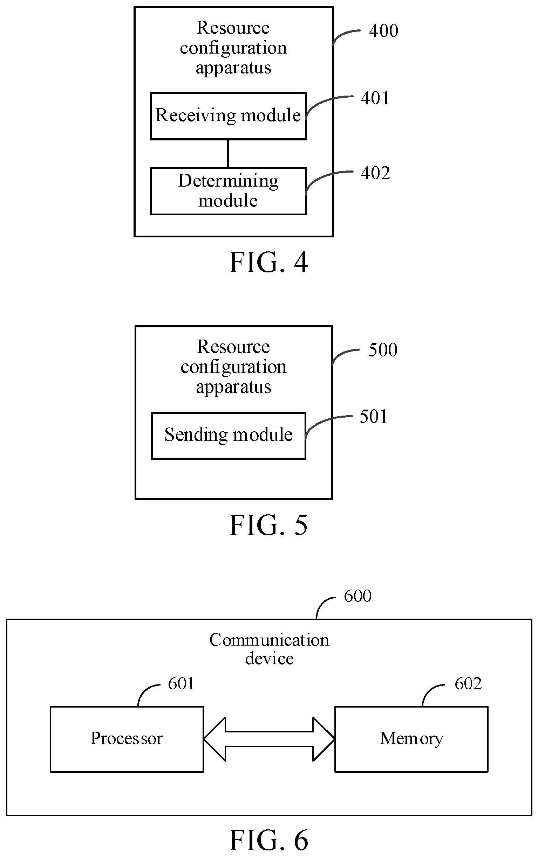

Refer to FIG. 4. FIG. 4 is a structural diagram of a resource configuration apparatus according to an embodiment of this application. As shown in FIG. 4, a resource configuration apparatus 400 includes:
a receiving module 401, configured to receive first configuration information sent by a network side device; and
a determining module 402, configured to determine a subband in an enhanced duplex mode based on the first configuration information, where the first configuration information includes at least one of the following:
   a period of the enhanced duplex mode;
   a width of the subband;
   a starting frequency domain position of the subband;
   a size of a guard band between the subband and another bandwidth, where the another bandwidth is a bandwidth other than the subband among bandwidths configured in the enhanced duplex mode;
   an attribute of the subband, where the attribute is related to a transmission direction; and
   a slot mode of the subband configured within the period of the enhanced duplex mode.

Optionally, when the first configuration information includes the size of the guard band between the subband and another bandwidth, the apparatus satisfies any one of the following:
the apparatus is in a subband full duplex SBFD mode; and
the apparatus is in a half duplex HD mode.

Optionally, the first configuration information is sent through at least one of the following:
a system message;
a dedicated terminal message;
a physical downlink control channel PDCCH;
a physical random access channel PRACH configuration; and
a dedicated configuration table, where the dedicated configuration table is used to specify the first configuration information.

The PRACH configuration includes a PRACH configuration table, and the PRACH configuration table includes the first configuration information.

Optionally, the guard band between the subband and the another bandwidth is determined based on at least one of the following:
a guard band configured in the PRACH configuration table; and
at least one random access channel occasion RO.

Optionally, the at least one RO is at least one RO at an edge of a bandwidth occupied by a PRACH.

Optionally, when the guard band between the subband and the another bandwidth is determined based on the at least one RO, the RO satisfies any one of the following:
the RO is a valid RO, and the RO is capable of being used for implementing SSB to RO mapping but not for actual PRACH transmission;
the RO is a valid RO, and the RO is capable of being used for implementing the SSB to RO mapping, but whether the RO is used for actual PRACH transmission depends on a first condition; and
the RO is not a valid RO, and the RO is not used for implementing an SSB to RO mapping.

Optionally, the first condition includes at least one of the following:
whether a time interval or a frequency domain interval between the RO and an SSB is less than or equal to a preset value;
whether an SSB or another downlink common channel or signal is sent on the another bandwidth; and
whether the apparatus receives an SSB or another downlink common channel or signal on the another bandwidth.

Optionally, the receiving module 401 is further configured to:
receive second configuration information sent by a network side device, where the second configuration information is used for configuring at least one RO type, and the at least one RO type includes at least one of the following:
an RO existing in an uplink slot;
an RO existing in a slot with a flexible symbol;
an RO existing in an uplink subband of a downlink slot; and
an RO not existing in an uplink subband of a downlink slot.

Optionally, when the at least one RO type includes the RO existing in the uplink subband of the downlink slot, no synchronization signal block SSB exists in the downlink slot, or an SSB exists in the downlink slot.

Optionally, the at least one RO type is configured through any one of the following:
an independent PRACH configuration resource, where different RO types are configured through different independent PRACH configuration resources; and
a common PRACH configuration resource, where different RO types are configured through the common PRACH configuration resource.

Optionally, in the case of PRACH repetition, the determining module 402 is further configured to:
determine an RO group from the at least one RO type based on the second configuration information, to determine a resource for at least one PRACH transmission, where the determining of the RO group satisfies at least one of the following:
the RO group includes different RO types;
the RO group includes a same RO type;
the RO types included in the RO group are mapped to a same downlink reference signal; and
the RO types included in the RO group are mapped to different downlink reference signals.

Optionally, in the enhanced duplex mode, an association between a reference signal and the RO satisfies at least one of the following:
different RO types or RO resources are separately associated with the SSB;
at least two different RO types or RO resources are associated with the SSB together; and
the RO is not associated with the SSB when the RO and the SSB overlap in a time domain.

Optionally, when the RO types or RO resources are associated with the SSB, the determining module 402 is further configured to:
determine a first time period or a first window, where the first window includes a determining window of a PRACH group, and the first time period includes at least one of the following:
an SSB to RO mapping cycle;
an SSB to RO association period; and
an SSB to RO association pattern period.

Optionally, the first time period or the first window is determined through at least one of the following:
respective corresponding first time periods or first windows are determined based on different RO types or RO resources;
a common first time period or first window is determined based on at least two different RO types or RO resources; and
the determining is performed based on the period of the enhanced duplex mode.

Optionally, the apparatus is a terminal in an idle state or in an inactive state.

In embodiments of this application the first configuration information, the apparatus can determine the subband in the enhanced duplex mode based on the first configuration information, thereby defining how to configure frequency-domain resources in the enhanced duplex mode, to enable the apparatus to flexibly use the duplex mode, and effectively improve transmission flexibility and transmission performance of the apparatus.

The resource configuration apparatus in embodiments of this application may be an electronic device, for example, an electronic device with an operating system, or may be a component in the electronic device, for example, an integrated circuit or a chip. The electronic device may be a terminal, or may be another device other than a terminal. For example, the terminal may include, but is not limited to, the types of the terminal 11 listed above, and the another device may be a server, a network attached storage (Network Attached Storage, NAS), or the like. This is not specifically limited in embodiments of this application.

The resource configuration apparatus provided in embodiments of this application can implement the processes implemented in the method embodiment of FIG. 2, and achieve a same technical effect. To avoid repetition, details are not described herein again.

Refer to FIG. 5. FIG. 5 is a structural diagram of another resource configuration apparatus according to an embodiment of this application. As shown in FIG. 5, a resource configuration apparatus 500 includes:
a sending module 501, configured to send first configuration information to a terminal, where the first configuration information is used for determining a subband in an enhanced duplex mode, and the first configuration information includes at least one of the following:
a period of the enhanced duplex mode;
a width of the subband;
a starting frequency domain position of the subband;
a size of a guard band between the subband and another bandwidth, where the another bandwidth is a bandwidth other than the subband among bandwidths configured in the enhanced duplex mode;
an attribute of the subband, where the attribute is related to a transmission direction; and
a slot mode of the subband configured within the period of the enhanced duplex mode.

Optionally, when the first configuration information includes the size of the guard band between the subband and another bandwidth, the terminal satisfies any one of the following:
the terminal is in a subband full duplex SBFD mode; and
the terminal is in a half duplex HD mode.

Optionally, the first configuration information is sent through at least one of the following:
a system message;
a dedicated terminal message;
a physical downlink control channel PDCCH;
a physical random access channel PRACH configuration; and
a dedicated configuration table, where the dedicated configuration table is used to specify the first configuration information.

The PRACH configuration includes a PRACH configuration table, and the PRACH configuration table includes the first configuration information.

Optionally, the guard band between the subband and the another bandwidth is determined based on at least one of the following:
a guard band configured in the PRACH configuration table; and
at least one random access channel occasion RO.

Optionally, the at least one RO is at least one RO at an edge of a bandwidth occupied by a PRACH.

Optionally, when the guard band between the subband and the another bandwidth is determined based on the at least one RO, the RO satisfies any one of the following:
the RO is a valid RO, and the RO is capable of being used for implementing SSB to RO mapping but not for actual PRACH transmission;
the RO is a valid RO, and the RO is capable of being used for implementing the SSB to RO mapping, but whether the RO is used for actual PRACH transmission depends on a first condition; and
the RO is not a valid RO, and the RO is not used for implementing an SSB to RO mapping.

Optionally, the first condition includes at least one of the following:
whether a time interval or a frequency domain interval between the RO and an SSB is less than or equal to a preset value;
whether an SSB or another downlink common channel or signal is sent on the another bandwidth; and
whether the terminal receives an SSB or another downlink common channel or signal on the another bandwidth.

Optionally, the sending module 501 is further configured to:
send second configuration information to the terminal, where the second configuration information is used for configuring at least one RO type, and the at least one RO type includes at least one of the following:
an RO existing in an uplink slot;
an RO existing in a slot with a flexible symbol;
an RO existing in an uplink subband of a downlink slot; and
an RO not existing in an uplink subband of a downlink slot.

Optionally, when the at least one RO type includes the RO existing in the uplink subband of the downlink slot, no synchronization signal block SSB exists in the downlink slot, or an SSB exists in the downlink slot.

Optionally, the at least one RO type is configured through any one of the following:
an independent PRACH configuration resource, where different RO types are configured through different independent PRACH configuration resources; and
a common PRACH configuration resource, where different RO types are configured through the common PRACH configuration resource.

Optionally, in the case of PRACH repetition, the apparatus further includes:
a determining module, configured to determine an RO group from the at least one RO type, to determine a resource for at least one PRACH transmission, where the determining of the RO group satisfies at least one of the following:
the RO group includes different RO types;
the RO group includes a same RO type;
the RO types included in the RO group are mapped to a same downlink reference signal; and
the RO types included in the RO group are mapped to different downlink reference signals.

Optionally, in the enhanced duplex mode, an association between a reference signal and the RO satisfies at least one of the following:
different RO types or RO resources are separately associated with the SSB;
at least two different RO types or RO resources are associated with the SSB together; and
the RO is not associated with the SSB when the RO and the SSB overlap in a time domain.

Optionally, when the RO types or RO resources are associated with the SSB, the determining module is further configured to:
determine a first time period or a first window, where the first window includes a determining window of a PRACH group, and the first time period includes at least one of the following:
an SSB to RO mapping cycle;
an SSB to RO association period; and
an SSB to RO association pattern period.

Optionally, the first time period or the first window is determined through at least one of the following:
respective corresponding first time periods or first windows are determined based on different RO types or RO resources;
a common first time period or first window is determined based on at least two different RO types or RO resources; and
the determining is performed based on the period of the enhanced duplex mode.

The resource configuration apparatus provided in embodiments of this application can implement the processes implemented in the method embodiment of FIG. 3, and achieve a same technical effect. To avoid repetition, details are not described herein again.

As shown in FIG. 6, an embodiment of this application further provides a communication device 600, including a processor 601 and a memory 602. The memory 602 stores a program or instructions executable in the processor 601. For example, when the communication device 600 is a terminal, the program or the instructions, when executed by the processor 601, implement the steps of the foregoing method embodiments of FIG. 2, and can achieve the same technical effect. When the communication device 600 is a network side device, the program or the instructions, when executed by the processor 601, implement the steps in the foregoing method embodiments of FIG. 3, and can achieve the same technical effect. To avoid repetition, details are not described herein again.

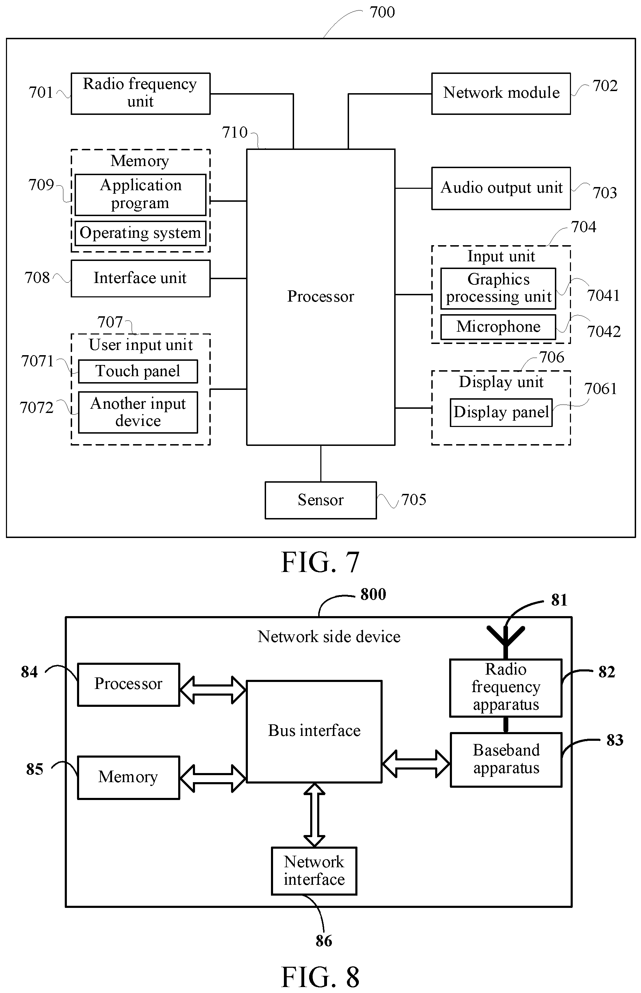

An embodiment of this application further provides a terminal, including a processor and a communication interface. The communication interface is coupled to the processor. The processor is configured to run a program or instructions, to implement the steps of the method embodiment shown in FIG. 2. The terminal embodiment corresponds to the foregoing method embodiment of the terminal side. The implementation processes and implementations of the foregoing method embodiments are all applicable to the terminal embodiment, and can achieve the same technical effect. Specifically, FIG. 7 is a schematic diagram of a hardware structure of a terminal for implementing an embodiment of this application.

A terminal 700 includes but is not limited to at least some of components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (such as a battery) that supplies power to various components. The power supply may be logically connected to the processor 710 through a power management system, thereby implementing functions such as charging, discharging, and power consumption management through the power management system. The terminal structure shown in FIG. 7 constitutes no limitation on the terminal, and the terminal may include more or fewer components than those shown in the figure, or some merged components, or different component arrangements. Details are not described herein again.

It should be noted that in embodiments of this application, the input unit 704 may include a graphics processing unit (Graphics Processing Unit, GPU) 7041 and a microphone 7042. The graphics processing unit 7041 processes image data of a static picture or a video obtained by an image capture apparatus (such as a camera) in a video capture mode or an image capture mode. The display unit 706 may include a display panel 7061. The display panel 7061 may be configured in a form such as a liquid crystal display or an organic light-emitting diode. The user input unit 707 includes at least one of a touch panel 7071 or another input device 7072. The touch panel 7071 is also referred to as a touch screen. The touch panel 7071 may include two parts: a touch detection apparatus and a touch controller. The another input device 7072 may include but is not limited to a physical keyboard, a function button (such as a volume control button or a power button), a trackball, a mouse, and a joystick. Details are not described herein again.

In embodiments of this application, the radio frequency unit 701 receives downlink data from a network side device and may transmit the downlink data to the processor 710 for processing. In addition, the radio frequency unit 701 may send uplink data to the network side device. Generally, the radio frequency unit 701 includes but is not limited to an antenna, an amplifier, a transceiver, a coupler, a low noise amplifier, a duplexer, and the like.

The memory 709 may be configured to store a software program or instructions and various data. The memory 709 may mainly include a first storage area for storing a program or instructions and a second storage area for storing data. The first storage area may store an operating system, an application or instructions required for at least one function (such as a sound playback function and an image playback function), and the like. In addition, the memory 709 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 709 in embodiments of this application includes but is not limited to these and any other suitable types of memories.

The processor 710 may include one or more processing units. Optionally, the processor 710 integrates an application processor and a modem processor. The application processor mainly processes operations related to an operating system, a user interface, an application program, and the like. The modem processor mainly processes wireless communication signals, and is for example a baseband processor. It may be understood that the foregoing modem processor may alternatively not be integrated into the processor 710.

The radio frequency unit 701 is configured to receive first configuration information sent by a network side device.

The processor 710 is configured to determine a subband in an enhanced duplex mode based on the first configuration information, where the first configuration information includes at least one of the following:
a period of the enhanced duplex mode;
a width of the subband;
a starting frequency domain position of the subband;
a size of a guard band between the subband and another bandwidth, where the another bandwidth is a bandwidth other than the subband among bandwidths configured in the enhanced duplex mode;
an attribute of the subband, where the attribute is related to a transmission direction; and
a slot mode of the subband configured within the period of the enhanced duplex mode.

In embodiments of this application, the terminal can determine the subband in the enhanced duplex mode based on the first configuration information, thereby defining how to configure frequency-domain resources on the terminal side in the enhanced duplex mode, to enable the terminal to flexibly use the duplex mode, and effectively improve transmission flexibility and transmission performance of the terminal.

It may be understood that for the implementation processes of all implementations mentioned in embodiments, reference may be made to the relevant description in the foregoing method embodiment of FIG. 2, and the same or corresponding technical effects can be achieved. To avoid repetition, details are not described herein again.

An embodiment of this application further provides a network side device, including a processor and a communication interface. The communication interface is coupled to the processor, and the processor is configured to run a program or instructions, to implement the steps of the method embodiment shown in FIG. 3. The network side device embodiment corresponds to the foregoing method embodiment of the network side device. The implementation processes and implementations of the foregoing method embodiment are all applicable to embodiments of the network side device, and can achieve the same technical effect.

Specifically, an embodiment of this application further provides a network side device. As shown in FIG. 8, the network side device 800 includes an antenna 81, a radio frequency apparatus 82, a baseband apparatus 83, a processor 84, and a memory 85. The antenna 81 is connected to the radio frequency device 82. In an uplink direction, the radio frequency apparatus 82 receives information through the antenna 81, and sends the received information to the baseband apparatus 83 for processing. In a downlink direction, the baseband apparatus 83 processes to-be-sent information and sends the processed to-be-sent information to the radio frequency apparatus 82. The radio frequency apparatus 82 processes the received information and then sends the processed received information through the antenna 81.

The method performed by the network side device in the foregoing embodiment may be implemented in the baseband apparatus 83. The baseband apparatus 83 includes a baseband processor.

The baseband apparatus 83 may include, for example, at least one baseband board. A plurality of chips are arranged on the baseband board, as shown in FIG. 8. One of the chips is for example a baseband processor, and is connected to the memory 85 through a bus interface to call a program in the memory 85 and perform the operations of the network device shown in the foregoing method embodiment.

The network side device may further include a network interface 86. The interface is, for example, a common public radio interface (Common Public Radio Interface, CPRI).

Specifically, the network side device 800 in this embodiment of this application further includes instructions or a program stored in the memory 85 and executable on the processor 84. The processor 84 calls the instructions or the program in the memory 85 to perform the method performed by each module shown in FIG. 5, and achieves the same technical effect. To avoid repetition, details are not described herein again.

An embodiment of this application further provides a readable storage medium. The readable storage medium stores a program or an instruction. The program or instruction, when executed by a processor, implements each process of the method embodiment shown in FIG. 2, or implements each process of the method embodiment shown in FIG. 3, and can achieve the same technical effect. To avoid repetition, details are not described herein again.

The processor is a processor in the terminal in the foregoing embodiment. The readable storage medium includes a computer-readable storage medium, such as a computer read-only memory ROM, a random access memory RAM, a disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or an instruction to implement each process of the method embodiment shown in FIG. 2, or to implement each process of the method embodiment shown in FIG. 3, and can achieve the same technical effect. To avoid repetition, details are not described herein again.

It should be understood that the chip mentioned in this embodiment of this application may further be referred to as a system level chip, a system chip, a chip system, a system on chip, or the like.

An embodiment of this application further provides a computer program/program product. The computer program/program product is stored in a storage medium. The computer program/program product is executed by at least one processor to implement each process of the method embodiment in FIG. 2, or to implement each process of the method embodiment in FIG. 3, and can achieve the same technical effect. To avoid repetition, details are not described herein again.

An embodiment of this application further provides a communication system, including a terminal and a network side device. The terminal may be configured to perform the steps of the foregoing resource configuration method, and the network side device may be configured to perform the steps of the foregoing resource configuration method.

It should be noted that in this specification, terms "include", "comprise", or any other variants thereof are intended to encompass non-exclusive inclusion, so that a process, a method, an article, or an apparatus including a series of elements not only includes those elements, but also includes another element not listed explicitly, or includes elements inherent to the process, the method, the article, or the apparatus. Without any further limitation, an element defined by the phrase "include one ..." does not exclude existence of an additional same element in the process, the method, the article, or the device that includes the element. In addition, it should be noted that the scope of the method and the apparatus in implementations of this application is not limited to function execution in the order shown or discussed, and may further include function execution in a substantially simultaneous manner or in the opposite order based on the functions involved. For example, the described method may be performed in an order different from the described order, and various steps may further be added, omitted, or combined. Moreover, features described with reference to some examples may be combined in another example.

Through the descriptions of the foregoing implementations, a person skilled in the art may clearly learn that the method in the foregoing embodiments may be implemented by a computer software product with a necessary universal hardware platform, or may be implemented by hardware. The computer software product is stored in a storage medium (such as a ROM, a RAM, a disk, or an optical disc) and includes several instructions, to enable the terminal or the network side device to perform the method in embodiments of this application.

Although embodiments of this application are described above with reference to the accompanying drawings, this application is not limited to the foregoing specific implementations. The foregoing specific implementations are illustrative only but not restrictive. With the enlightenment of this application, a person of ordinary skill in the art may make many forms of implementations without departing from the concept of this application and the protection scope of the claims. These implementations fall within the protection scope of this application.

## Claims

1. A resource configuration method, comprising:
receiving, by a terminal, first configuration information sent by a network side device; and
determining, by the terminal, a subband in an enhanced duplex mode based on the first configuration information, wherein the first configuration information comprises at least one of the following:
a period of the enhanced duplex mode;
a width of the subband;
a starting frequency domain position of the subband;
a size of a guard band between the subband and another bandwidth, wherein the another bandwidth is a bandwidth other than the subband among bandwidths configured in the enhanced duplex mode;
an attribute of the subband, wherein the attribute is related to a transmission direction; and
a slot mode of the subband configured within the period of the enhanced duplex mode.

2. The method according to claim 1, wherein when the first configuration information comprises the size of the guard band between the subband and the another bandwidth, the terminal satisfies any one of the following:
the terminal is in a subband full duplex SBFD mode; and
the terminal is in a half duplex HD mode.

3. The method according to claim 1 or 2, wherein the first configuration information is sent through at least one of the following:
a system message;
a dedicated terminal message;
a physical downlink control channel PDCCH;
a physical random access channel PRACH configuration; and
a dedicated configuration table, wherein the dedicated configuration table is used to specify the first configuration information.

4. The method according to claim 3, wherein the PRACH configuration comprises a PRACH configuration table, and the PRACH configuration table comprises the first configuration information.

5. The method according to claim 4, wherein the guard band between the subband and the another bandwidth is determined based on at least one of the following:
a guard band configured in the PRACH configuration table; and
at least one random access channel occasion RO.

6. The method according to claim 5, wherein the at least one RO is at least one RO at an edge of a bandwidth occupied by a PRACH.

7. The method according to claim 5, wherein when the guard band between the subband and the another bandwidth is determined based on the at least one RO, the RO satisfies any one of the following:
the RO is a valid RO, and the RO is capable of being used for implementing SSB to RO mapping but not for actual PRACH transmission;
the RO is a valid RO, and the RO is capable of being used for implementing the SSB to RO mapping, but whether the RO is used for actual PRACH transmission depends on a first condition; and
the RO is not a valid RO, and the RO is not used for implementing an SSB to RO mapping.

8. The method according to claim 7, wherein the first condition comprises at least one of the following:
whether a time interval or a frequency domain interval between the RO and an SSB is less than or equal to a preset value;
whether an SSB or another downlink common channel or signal is sent on the another bandwidth; and
whether the terminal receives an SSB or another downlink common channel or signal on the another bandwidth.

9. The method according to any one of claims 1 to 8, further comprising:
receiving, by the terminal, second configuration information sent by a network side device, wherein the second configuration information is used for configuring at least one RO type, and the at least one RO type comprises at least one of the following:
an RO existing in an uplink slot;
an RO existing in a slot with a flexible symbol;
an RO existing in an uplink subband of a downlink slot; and
an RO not existing in an uplink subband of a downlink slot.

10. The method according to claim 9, wherein when the at least one RO type comprises the RO existing in the uplink subband of the downlink slot, no synchronization signal block SSB exists in the downlink slot, or an SSB exists in the downlink slot.

11. The method according to claim 9, wherein the at least one RO type is configured through any one of the following:
an independent PRACH configuration resource, wherein different RO types are configured through different independent PRACH configuration resources; and
a common PRACH configuration resource, wherein different RO types are configured through the common PRACH configuration resource.

12. The method according to claim 9, wherein when a PRACH repetition occurs, the method further comprises:
determining, by the terminal, an RO group from the at least one RO type based on the second configuration information, to determine a resource for at least one PRACH transmission, wherein the determining of the RO group satisfies at least one of the following:
the RO group comprises different RO types;
the RO group comprises a same RO type;
the RO types comprised in the RO group are mapped to a same downlink reference signal; and
the RO types comprised in the RO group are mapped to different downlink reference signals.

13. The method according to any one of claims 1 to 12, wherein in the enhanced duplex mode, an association between a reference signal and the RO satisfies at least one of the following:
different RO types or RO resources are separately associated with the SSB;
at least two different RO types or RO resources are associated with the SSB together; and
the RO is not associated with the SSB when the RO and the SSB overlap in a time domain.

14. The method according to claim 13, wherein when the RO types or RO resources are associated with the SSB, the method further comprises:
determining, by the terminal, a first time period or a first window, wherein the first window comprises a determining window of a PRACH group, and the first time period comprises at least one of the following:
an SSB to RO mapping cycle;
an SSB to RO association period; and
an SSB to RO association pattern period.

15. The method according to claim 14, wherein the first time period or the first window is determined through at least one of the following:
respective corresponding first time periods or first windows are determined based on different RO types or RO resources;
a common first time period or first window is determined based on at least two different RO types or RO resources; and
the determining is performed based on the period of the enhanced duplex mode.

16. The method according to any one of claims 1 to 15, wherein the terminal is a terminal in an idle state or in an inactive state.

17. A resource configuration method, comprising:
sending, by a network side device, first configuration information to a terminal, wherein the first configuration information is used for determining a subband in an enhanced duplex mode, and the first configuration information comprises at least one of the following:
a period of the enhanced duplex mode;
a width of the subband;
a starting frequency domain position of the subband;
a size of a guard band between the subband and another bandwidth, wherein the another bandwidth is a bandwidth other than the subband among bandwidths configured in the enhanced duplex mode;
an attribute of the subband, wherein the attribute is related to a transmission direction; and
a slot mode of the subband configured within the period of the enhanced duplex mode.

18. The method according to claim 17, wherein when the first configuration information comprises the size of the guard band between the subband and the another bandwidth, the terminal satisfies any one of the following:
the terminal is in a subband full duplex SBFD mode; and
the terminal is in a half duplex HD mode.

19. The method according to claim 17 or 18, wherein the first configuration information is sent through at least one of the following:
a system message;
a dedicated terminal message;
a physical downlink control channel PDCCH;
a physical random access channel PRACH configuration; and
a dedicated configuration table, wherein the dedicated configuration table is used to specify the first configuration information.

20. The method according to claim 19, wherein the PRACH configuration comprises a PRACH configuration table, and the PRACH configuration table comprises the first configuration information.

21. The method according to claim 20, wherein the guard band between the subband and the another bandwidth is determined based on at least one of the following:
a guard band configured in the PRACH configuration table; and
at least one random access channel occasion RO.

22. The method according to claim 21, wherein the at least one RO is at least one RO at an edge of a bandwidth occupied by a PRACH.

23. The method according to claim 21, wherein when the guard band between the subband and the another bandwidth is determined based on the at least one RO, the RO satisfies any one of the following:
the RO is a valid RO, and the RO is capable of being used for implementing SSB to RO mapping but not for actual PRACH transmission;
the RO is a valid RO, and the RO is capable of being used for implementing the SSB to RO mapping, but whether the RO is used for actual PRACH transmission depends on a first condition; and
the RO is not a valid RO, and the RO is not used for implementing an SSB to RO mapping.

24. The method according to claim 23, wherein the first condition comprises at least one of the following:
whether a time interval or a frequency domain interval between the RO and an SSB is less than or equal to a preset value;
whether an SSB or another downlink common channel or signal is sent on the another bandwidth; and
whether the terminal receives an SSB or another downlink common channel or signal on the another bandwidth.

25. The method according to any one of claims 17 to 24, further comprising:
sending, by the network side device, second configuration information to the terminal, wherein the second configuration information is used for configuring at least one RO type, and the at least one RO type comprises at least one of the following:
an RO existing in an uplink slot;
an RO existing in a slot with a flexible symbol;
an RO existing in an uplink subband of a downlink slot; and
an RO not existing in an uplink subband of a downlink slot.

26. The method according to claim 25, wherein when the at least one RO type comprises the RO existing in the uplink subband of the downlink slot, no synchronization signal block SSB exists in the downlink slot, or an SSB exists in the downlink slot.

27. The method according to claim 25, wherein the at least one RO type is configured through any one of the following:
an independent PRACH configuration resource, wherein different RO types are configured through different independent PRACH configuration resources; and
a common PRACH configuration resource, wherein different RO types are configured through the common PRACH configuration resource.

28. The method according to claim 25, wherein when a PRACH repetition occurs, the method further comprises:
determining, by the network side device, an RO group from the at least one RO type, to determine a resource for at least one PRACH transmission, wherein the determining of the RO group satisfies at least one of the following:
the RO group comprises different RO types;
the RO group comprises a same RO type;
the RO types comprised in the RO group are mapped to a same downlink reference signal; and
the RO types comprised in the RO group are mapped to different downlink reference signals.

29. The method according to any one of claims 1 to 28, wherein in the enhanced duplex mode, an association between a reference signal and the RO satisfies at least one of the following:
different RO types or RO resources are separately associated with the SSB;
at least two different RO types or RO resources are associated with the SSB together; and
the RO is not associated with the SSB when the RO and the SSB overlap in a time domain.

30. The method according to claim 29, wherein when the RO types or RO resources are associated with the SSB, the method further comprises:
determining, by the network side device, a first time period or a first window, wherein the first window comprises a determining window of a PRACH group, and the first time period comprises at least one of the following:
an SSB to RO mapping cycle;
an SSB to RO association period; and
an SSB to RO association pattern period.

31. The method according to claim 30, wherein the first time period or the first window is determined through at least one of the following:
respective corresponding first time periods or first windows are determined based on different RO types or RO resources;
a common first time period or first window is determined based on at least two different RO types or RO resources; and
the determining is performed based on the period of the enhanced duplex mode.

32. A resource configuration apparatus, comprising:
a receiving module, configured to receive first configuration information sent by a network side device; and
a determining module, configured to determine a subband in an enhanced duplex mode based on the first configuration information, wherein the first configuration information comprises at least one of the following:
a period of the enhanced duplex mode;
a width of the subband;
a starting frequency domain position of the subband;
a size of a guard band between the subband and another bandwidth, wherein the another bandwidth is a bandwidth other than the subband among bandwidths configured in the enhanced duplex mode;
an attribute of the subband, wherein the attribute is related to a transmission direction; and
a slot mode of the subband configured within the period of the enhanced duplex mode.

33. A resource configuration apparatus, comprising:
a sending module, configured to send first configuration information to a terminal, wherein the first configuration information is used for determining a subband in an enhanced duplex mode, and the first configuration information comprises at least one of the following:
a period of the enhanced duplex mode;
a width of the subband;
a starting frequency domain position of the subband;
a size of a guard band between the subband and another bandwidth, wherein the another bandwidth is a bandwidth other than the subband among bandwidths configured in the enhanced duplex mode;
an attribute of the subband, wherein the attribute is related to a transmission direction; and
a slot mode of the subband configured within the period of the enhanced duplex mode.

34. A terminal, comprising a processor and a memory, wherein the memory stores a program or instructions executable on the processor, and the program or the instructions, when executed by the processor, implement the steps of the resource configuration method according to any one of claims 1 to 16.

35. A network side device, comprising a processor and a memory, wherein the memory stores a program or instructions executable on the processor, and the program or the instructions, when executed by the processor, implement the steps of the resource configuration method according to any one of claims 17 to 31.

36. A readable storage medium, wherein the readable storage medium stores a program or instructions, and the program or the instructions, when executed by a processor, implement the steps of the resource configuration method according to any one of claims 1 to 16, or implement the steps of the resource configuration method according to any one of claims 17 to 31.
